# FASCICULE DE BREVET EUROPEEN

(11) **EP 1 564 225 B1**
(45) Date de publication et mention de la délivrance du brevet: **12.11.2014**
(21) Numéro de dépôt: 04290338.5
(22) Date de dépôt: 10.02.2004
(51) Int. Cl.: C08F 4/32, C08F 2/18, C08F 14/06

(54) **Emulsion non gelée d'hydroxyperoxyester**
Nicht-Gel Emulsion aus Hydroxyperoxyester
Non-gel hydroxyperoxyester emulsion

(43) Date de publication de la demande: 17.08.2005
(73) Titulaire: ARKEMA FRANCE, 92700 Colombes (FR)
(72) Inventeur: Grimaldi, Sandra, 69110 Sainte-Foy-Les-Lyon (FR); Gallone, Patrick, 69350 La Mulatiere (FR)
(74) Mandataire: Bonnel, Claudine

(56) Documents cités:
- EP-A- 0 032 757
- US-A- 3 988 261
- US-A- 5 260 390
- PATENT ABSTRACTS OF JAPAN vol. 1996, no. 02, 29 février 1996 (1996-02-29) & JP 7 258315 A (ATOCHEM YOSHITOMI KK), 9 octobre 1995 (1995-10-09)

## Description

La présente invention consiste à fournir une émulsion aqueuse liquide d'hydroxyperoxyester utilisable pour la polymérisation ou la copolymérisation de monomères éthyléniquement insaturés et plus particulièrement pour les monomères de type vinyliques halogénés. Les hydroxyperoxyesters sont généralement utilisés en tant qu'initiateurs radicalaires pour la polymérisation de monomères vinyliques. Ce sont des initiateurs réactifs avec une température de demi-vie pour 10 heures inférieure à 50°C (37°C pour le 4-hydroxy-2-méthylpentyl peroxynéodécanoate), mesurée dans le benzène ou le trichlroéthylène et qui peuvent avoir une décomposition violente.

Le document JP07-258315 divulgue une émulsion aqueuse de peroxyde organique contenant au total de 10 à 65% en poids d'un ou plusieurs peroxydes organiques comprenant des hydroxyperoxyesters, de l'eau, 0,001 à 10 % en poids d'un tensioactif, 0,001 à 0,5 parties en poids (par rapport à 1 partie en poids d'eau) d'un colloïde protecteur et 0,1 à 5 parties en poids (par rapport à 1 partie en poids d'eau) d'un ou plusieurs alcools solubles dans l'eau.
Le brevet EP0032757 est relatif à une émulsion aqueuse liquide de peroxydes organiques contenant 20 à 60% en poids de peroxydes qui ne sont pas des hydroxyperoxyesters, 2 à 20% en poids d'alcanol et/ou alcane diol, 0,01 à 10% en poids de tensio-actif et/ou de colloïde protecteur.

Dans la mesure où les tensioactifs entraînent des modifications de porosité et de granulométrie du polymère dans le cadre d'une utilisation pour réaliser de la polymérisation, il est essentiel d'obtenir une émulsion de peroxyde sans tensioactifs. L'absence de tensioactifs permet de plus de baisser les coûts des émulsions et facilite le traitement des eaux usées après polymérisation.
L'émulsion devant de plus être :
- la plus efficace possible lors de la polymérisation c'est à dire présentant des gouttelettes les plus fines possible avec une distribution étroite,
- stable (conservation de la qualité de l'émulsion pendant au moins 6 mois),
- non gélifiable aux températures de stockage aux environs de -10°C, voire -15°C, voire encore plus favorablement -20°C.
- non dangereuse lors de son stockage et son utilisation (limitation du risque de décomposition),
- compatible avec un système de polymérisation de dérivés vinyliques,
- liquide avec un temps d'écoulement faible (< à 200s), et
- dégradable facilement au moment du traitement des effluents donc dépourvue de solvant organique.

La demanderesse a donc trouvé une émulsion répondant à ces exigences. C'est une émulsion aqueuse liquide de peroxyde organique comprenant :
- 10 à 65% en poids, de préférence 50 à 60% en poids d'hydroxyperoxyester et plus particulièrement le 4-hydroxy-2-méthylpentyl peroxynéodécanoate en tant que peroxyde organique ;
- 2 à 25% en poids, de préférence 5 à 20% en poids d'un ou d'au moins deux agents anti-gel pris dans le groupe comprenant le méthanol, l'éthanol, l'éthylène glycol, l'isopropanol, le n-propanol, le propane-1,2-diol, le propane-1,3-diol, le glycérol, le butan-1-ol, le butan-2-ol, le butan-1,3-diol et le butan-1,4-diol;
- 0,01 à 10% en poids, de préférence 0,5 à 5% en poids d'un agent colloïde protecteur qui est un composé de masse moléculaire élevée soluble dans l'eau pris dans le groupe des alcools polyvinyliques, des acétates polyvinyliques partiellement hydrolysés et des dérivés de la cellulose ;
- le reste étant de l'eau ;
ladite émulsion ayant de préférence un temps d'écoulement < 200s selon ASTM D 1200. De préférence la taille (d₅₀) des gouttelettes formant l'émulsion est < 10 µm, avantageusement < 5 µm, et de préférence la taille (d₁₀₀) des gouttelettes est < 15 µm, avantageusement < 11 µm.

Une émulsion aqueuse à base d'hydroxyperoxyester présente les avantages suivants :
- meilleures manipulation et utilisation du peroxyde car la viscosité de la formulation résultante est plus faible que la viscosité du peroxyde lui-même ;
- meilleure sécurité au niveau de la manipulation, du stockage et du transport : une décomposition violente du peroxyde ne pourra avoir lieu à cause de l'environnement aqueux dans lequel le peroxyde est placé : l'eau présente dans la formulation absorbe et dissipe l'énergie générée en cas de décomposition du peroxyde ;
- meilleure compatibilité avec le système de polymérisation (par exemple polymérisation du PVC) auquel le peroxyde est destiné : d'une part, l'émulsion est complètement compatible avec le milieu en suspension, d'autre part les caractéristiques de l'émulsion , telles que la taille des gouttelettes fines de l'émulsion vont permettre des temps de dissolution dans le système de polymérisation plus courts.

D'un point de vu expérimental, nous avons observé que la présence d'un groupement hydrophile dans la molécule d'hydroxyperoxyester rend l'opération d'émulsion du peroxyde dans un système aqueux plus délicate.
De plus, afin d'éviter les phénomènes de bouchage, il est important que l'émulsion soit liquide avec une faible viscosité (< 400 mPa.s) afin de permettre une bonne efficacité du peroxyde lors de la polymérisation.

Nos émulsions ne contiennent pas d'agents tensioactifs, ni de plastifiant, de paraffine ou de solvant organique. En effet, un tel solvant restant dans le polymère final nécessiterait une étape d'évaporation supplémentaire avec un risque d'inflammabilité. La stabilité de nos émulsions est assurée pendant au moins 6 mois. Il n'apparaît pas de phase de séparation pendant le stockage et on ne constate pas de phénomène de gel à -20°C.

L'invention a pour objet une émulsion aqueuse liquide de peroxyde organique, dépourvue de tensio-actif et de solvant organique, ayant une température de gélification < -10°C et constituée de:
a. 10 à 65% en poids d'hydroxyperoxyester en tant que peroxyde organique avec une température de demi-vie < à 50°C pour 10 heures et;
b. 2 à 25% en poids d'agent anti-gel de type alcool léger pris dans le, groupe comprenant le méthanol, l'éthanol, le n-propanol et l'isopropanol, et/ou de type alcool lourd pris dans le groupe comprenant l'éthylène glycol, le propane-1,2-diol, le propane-1,3-diol, le glycérol, le butan-1-ol, le butan-2-ol, le butan-1,3-diol et le butan-1 ,4-diol;
c. 0,01 à 10% en poids d'un agent colloïde protecteur pris dans le groupe des alcools polyvinyliques, des acétates polyvinyliques partiellement hydrolysés et des dérivés de la cellulose;
d. éventuellement un ou des additifs; et
e. le reste étant de l'eau pour arriver à un total de 100% en poids.
   Selon un mode de réalisation, l'émulsion a un temps d'écoulement < 200s selon ASTM D 1200.
   Selon un mode de réalisation, la taille (d₅₀) des gouttelettes formant l'émulsion est < 10 µm, de préférence < 5 µm et la taille (d₁₀₀) des gouttelettes est < 15 µm, de préférence < 11 µm.
   Selon un mode de réalisation, l'émulsion est constituée de :

a. 50 à 60% en poids du peroxyde organique ;
b. 5 à 20% en poids d'agent anti-gel ;
c. 0,5 à 5% en poids de l'agent colloïde protecteur; et le reste étant de l'eau pour arriver à un total de 100% en poids.
   Selon un mode de réalisation, l'hydroxyperoxyester est pris dans le groupe comprenant le 4-hydroxy-2-méthylpentylperoxynéodécanoate, le 4-hydroxy-2-méthylpentylperoxynéoheptanoate, le 4-hydroxy-2-méthylpentylperoxy-(2-éthylhexanoate), le 4-hydroxy-2-méthylpentylperoxy-2-phénylbutyrate, le 4-hydroxy-2-méthylpentylperoxy-2-phénoxypropionate, le 4-hydroxy-2-méthylpentylperoxyméthacrylate, le 4-hydroxy-2-méthylpentylperoxy-2-méthylcrotonate, le 4-hydroxy-2-méthylpentylperoxyisobutyrate, le 4-hydroxy-2-méthylpentylperoxy-(2-butyloctanoate), le 4-hydroxy-2-méthylpentylperoxypivalate, le 4-hydroxy-2-méthylpentylperoxynéohexanoate, le 4-hydroxy-2-méthylpentylperoxynéotridécanoate, le 4-hydroxy-2-méthylhexylperoxynéohexanoate, le 4-hydroxy-2-méthylhexylperoxynéodécanoate, le 4-hydroxy-2-méthylhexyl peroxypivalate, le 5-hydroxy-1,3,3-triméthylcyclohexyl peroxyneodecanoate, le 4-hydroxy-2,6-diméthyl-2,6-di(néohexanoylperoxy)heptane et le 4-hydroxy-2,6 -diméthyl-2,6-di(néodecanoylperoxy)heptane.
   Selon un mode de réalisation, l'agent antigel est un mélange d'alcool léger et alcool lourd.
   Selon un mode de réalisation, l'agent antigel est un mélange de méthanol et de propane-1,2-diol.
   Selon un mode de réalisation, l'agent colloïde protecteur est un acétate de polyvinyle hydrolysé à un degré de 5 à 85% en mole, de préférence de 5 à 75% en mole.
   Selon un mode de réalisation, l'émulsion est constituée de :

a. 45 à 65% en poids de 4-hydroxy-2-méthylpentyl peroxynéodécanoate;
b. 2 à 20% en poids d'un mélange de méthanol et de propane-1,2-diol ;
c. 0.01 à 10% en poids d'alcool polyvinylique ou d'acétate de polyvinyle hydrolysé à un degré de 5 à 85% en mole, de préférence de 5 à 75% en mole; et
le reste étant de l'eau pour faire un total de 100% en poids.
L'invention concerne également un procédé de préparation de l'émulsion précédemment décrite, caractérisé en ce que l'agent anti-gel ainsi que l'agent colloïde protecteur sont dispersés dans de l'eau pour obtenir une phase aqueuse homogène puis le peroxyde est ajouté à ladite phase aqueuse, le tout étant ensuite émulsionné au cours d'une étape d'émulsion à une température < à 5°C.
Selon un mode de réalisation, le procédé est caractérisé en ce que l'étape d'émulsion est réalisée avec un mélangeur à fort taux de cisaillement pour diviser le peroxyde dans la phase aqueuse.

Selon un mode de réalisation, le procédé selon est caractérisé en ce que l'on utilise un mélangeur tel qu'un mélangeur ultrasonique ou un mélangeur rotor-stator.
L'invention a également trait à l'utilisation de l'émulsion définie ci-dessus pour la polymérisation ou la copolymérisation de monomères éthyléniquement insaturés.
Selon un mode de réalisation, les monomères éthyléniquement insaturés comprennent le chlorure de vinyle.

L'invention va maintenant être décrite plus en détails.
Afin d'améliorer la synthèse de polymères à partir de monomères éthyléniquement insaturés, l'hydroxyperoxyester est émulsifié dans l'eau.
On peut citer comme exemple d'hydroxyperoxyesters : 4-hydroxy-2-méthylpentyl peroxyneodecanoate, 4-hydroxy-2-méthylpentyl peroxyneoheptanoate, 4-hydroxy-2-méthylpentyl peroxy-(2-éthylhexanoate), 4-hydroxy-2-méthylpentyl peroxy-2-phénylbutyrate, 4-hydroxy-2-méthylpentyl peroxy-2-phénoxypropionate, 4-hydroxy-2-méthylpentyl peroxyméthacrylate, 4-hydroxy-2-méthylpentyl peroxy-2-méthylcrotonate, 4-hydroxy-2-méthylpentyl peroxyisobutyrate, 4-hydroxy-2-méthylpentyl peroxy-(2-butyloctanoate), 4-hydroxy-2-méthylpentyl peroxypivalate, 4-hydroxy-2-méthylpentyl peroxyneohexanoate, 4-hydroxy-2-méthylpentyl peroxyneotridecanoate, 4-hydroxy-2-méthylhexyl peroxyneohexanoate, 4-hydroxy-2-méthylhexyl peroxyneodecanoate, 4-hydroxy-2-méthylhexyl peroxypivalate, 5-hydroxy-1,3,3-triméthylcyclohexyl peroxyneodecanoate, 4-hydroxy-2,6-diméthyl-2,6-di(neohexanoylperoxy)heptane et 4-hydroxy-2,6 -diméthyl-2,6-di(neodecanoylperoxy)heptane. On utilise avantageusement le 4-hydroxy-2-méthylpentyl peroxynéodécanoate. De préférence l'hydroxyperoxyester est utilisé pur, non dilué dans un solvant pour fabriquer l'émulsion.

S'agissant de l'agent colloïde protecteur, c'est un composé de masse moléculaire élevée, soluble dans l'eau, pris dans le groupe des alcools polyvinyliques (abrégé PVA), des acétates polyvinyliques partiellement hydrolysés et des dérivés de la cellulose. L'agent colloïde utilisé de préférence est un acétate de polyvinyle partiellement hydrolysé (saponifié) à un degré de 5 à 85% en mole, de préférence de 5 à 75% en mole.

S'agissant de l'agent anti-gel, on peut citer par exemple les monools, diols et triols tels que le méthanol, l'éthanol, l'éthylène glycol, l'isopropanol, le n-propanol, le propane-1,2-diol, le propane-1,3-diol, le glycérol, le butan-1-ol, le butan-2-ol, le butan-1,3-diol et le butan-1,4-diol et leurs mélanges, ces mélanges comprenant au moins deux des agents anti-gel énumérés précédemment, l'un de type alcool léger et l'autre de type alcool lourd, avantageusement un mélange de méthanol et de propane-1 ,2-diol.

L'émulsion aqueuse liquide de peroxyde organique de la présente invention peut éventuellement contenir des additifs incluant les agents ajusteurs de pH tels que les tampons phosphate et citrate, les agents chélatants, des biocides par exemple des fongicides, des antiozonants, des antioxidants, des antidégradants, des stabilisants UV, des agents antistatiques, des agents gonflants et des agents de démoulage. Ces additifs peuvent être ajoutés dans les quantités habituellement utilisées et connues de l'homme de l'art.

Nous allons maintenant présenter un mode de réalisation de l'invention (Ex1) non limitatif ainsi que des comparatifs (Cp1 à 3) dont les constituants sont définis ci-dessous et dont les proportions sont présentées dans le **TABLEAU 1.** Hydroxyperoxyester : 4-hydroxy-2-méthylpentyl peroxynéodécanoate pur à 97%.
tensio-actif 1 : mono- et di-glycéride propylèneglycol.
tensio-actif 2 : monolaurate de polyoxyéthylène sorbitane (HLB = 2.8).
PVA : acétate de polyvinyle avec un taux d'hydrolyse de 72.5% en mole.

### Mode opératoire de préparation de l'émulsion de l'Ex1 et des CP1-3:

Les comparatifs Cp1, Cp2 et Cp3 sont préparés selon le même mode opératoire que l'exemple 1. L'agent anti-gel ainsi que l'alcool polyvinylique sont dispersés dans de l'eau pour obtenir une phase aqueuse homogène. Le peroxyde (constituant la phase organique) est additionné avec précaution à la phase aqueuse précédente. L'ensemble est émulsionné, la température étant rigoureusement contrôlée au cours de l'émulsification pour ne pas dépasser 5°C. Les émulsions sont obtenues en utilisant un mélangeur à fort taux de cisaillement pour diviser finement le peroxyde dans la phase aqueuse. De tels mélangeurs peuvent être des mélangeurs ultrasoniques, des homogénéisateurs, des mélangeurs rotor-stator à agitation rapide (Ultra-Turax®) et similaires. Les émulsions de l'Ex1 et des Cp1-3 sont réalisés avec la technologies Ultra-Turax® (vitesse de 13500 tours par minute).
Les échantillons d'émulsions sont ensuite conservés à -20°C. Le Cp2 correspond à l'émulsion décrite dans le document JP07-258315. La taille des gouttelettes (d₁₀₀ et d₅₀) est déterminée par des moyens conventionnels en utilisant la technique de diffraction de la lumière. D₁₀₀ correspond à 100% de la distribution en tailles de gouttelettes présentes dans l'émulsion du peroxyde organique et d₅₀ correspond à 50% de la distribution en tailles de gouttelettes présentes dans l'émulsion du peroxyde organique. Les mesures sont faites en utilisant un dispositif de Malvern Master Sizer® à température ambiante. La viscosité dans le **TABLEAU 1** est exprimée en seconde et a été mesurée selon ASTM D1200 - coupe FORD à 5°C.

**TABLEAU 1**

| (les pourcentages sont donnés en poids) | | | | |
|---|---|---|---|---|
| | **Ex1** | **Cp1** | **Cp2** | **Cp3** |
| **hydroxyperoxyester** | 55,4% | 55,2% | 28%(4) | 30,6% |
| **Méthanol** | 8% | 0 | 11,7% | 0 |
| **Propane-1,2-diol** | 10% | 24% | 0 | 35,9% |
| **PVA** | 1,3% | 1,3% | 0,3% | 1,3% |
| **Eau** | 25,3% | 19,5% | 28,7% | 32,4% |
| **tensio-actif 1** | 0 | 0 | 1,3% | 0 |
| **tensio-actif 2** | 0 | 0 | 2,3% | 0 |
| **Viscosité(s)** | 141 | 269 | 34 | 428 |
| **d₅₀ (µm)** | 3,2(1) | 6,3(2) | 0,6(3) | 2,7(3) |
| **d₁₀₀ (µm)** | 10,5(1) | 16,6(2) | 30,5(3) | 103,6(3) |

| | | | | |
|---|---|---|---|---|
| (1) après 106 jours | | | | |
| (2) après 85 jours | | | | |
| (3) après 42 jours | | | | |
| (4) + 28% en poids d'huile | | | | |

On constate, au vu du **TABLEAU 1**, que notre composition Ex1 présente une très bonne viscosité par rapport au Cp1 et au Cp3. On constate également que la taille maximale des gouttelettes d₁₀₀ de l'émulsion de la composition selon l'invention est largement plus faible que celle des Cp1-3 et cela même après 106 jours. Ceci prouve la très bonne stabilité de l'émulsion. Dans le Cp3, on constate que les gouttelettes fusionnent beaucoup plus vite les unes aux autres par rapport aux Cp2, Cp1 et surtout à l'exemple 1. D'autre part, on constate que la distribution des gouttelettes dans l'Ex1 est plus étroite que dans les Cp1-3. On a donc une plus grande homogénéité dans l'émulsion selon l'invention. Ceci est important pour avoir une bonne efficacité du peroxyde en émulsion au moment de la polymérisation.

Une émulsion préférée sera constituée de 45 à 65% en poids de 4-hydroxy-2-méthylpentyl peroxynéodécanoate, de 2 à 20% en poids d'un mélange de méthanol et de propane-1,2-diol, de 0.01 à 10% en poids d'alcool polyvinylique ou de polyvinyle acétate hydrolysé et d'eau pour faire un total de 100% en poids.

## Revendications

1. Emulsion aqueuse liquide de peroxyde organique, dépourvue de tensio-actif et de solvant organique, ayant une température de gélification < -10 °C et constituée de:
a. 10 à 65% en poids d'hydroxyperoxyester en tant que peroxyde organique avec une température de demi-vie < à 50 °C pour 10 heures et;
b. 2 à 25% en poids d'agent anti-gel de type alcool léger pris dans le groupe comprenant le méthanol, l'éthanol, le n-propanol et l'isopropanol, et/ou de type alcool lourd pris dans le groupe comprenant l'éthylène glycol, le propane-1,2-diol, le propane-1,3-diol, le glycérol, le butan-1-ol, le butan-2-ol, le butan-1,3-diol et le butan-1,4-diol;
c. 0,01 à 10% en poids d'un agent colloïde protecteur pris dans le groupe des alcools polyvinyliques, des acétates polyvinyliques partiellement hydrolysés et des dérivés de la cellulose;
d. éventuellement un ou des additifs; et
e. le reste étant de l'eau pour arriver à un total de 100% en poids.

2. Emulsion selon la revendication 1 ayant un temps d'écoulement < 200s selon ASTM D 1200.

3. Emulsion selon l'une des revendications 1 ou 2, **caractérisée en ce que** la taille (d50) des gouttelettes formant l'émulsion est < 10 µm, de préférence < 5 µm et la taille (d100) des gouttelettes est < 15 µm, de préférence < 11 µm.

4. Emulsion selon l'une des revendications 1 à 7, **caractérisée en ce que** ladite émulsion est constituée de :
a. 50 à 60% en poids du peroxyde organique ;
b. 5 à 20% en poids d'agent anti-gel ;
c. 0,5 à 5% en poids de l'agent colloïde protecteur; et
le reste étant de l'eau pour arriver à un total de 100% en poids.

5. Emulsion selon l'une des revendications 1 à 4, **caractérisée en ce que** l'hydroxyperoxyester est pris dans le groupe comprenant le 4-hydroxy-2-méthylpentylperoxynéodécanoate, le 4-hydroxy-2-méthylpentylperoxynéoheptanoate, le 4-hydroxy-2-méthylpentylperoxy-(2-éthylhexanoate), le 4-hydroxy-2-méthylpentylperoxy-2-phénylbutyrate, le 4-hydroxy-2-méthylpentylperoxy-2-phénoxypropionate, le 4-hydroxy-2-méthylpentylperoxyméthacrylate, le 4-hydroxy-2-méthylpentylperoxy-2-méthylcrotonate, le 4-hydroxy-2-méthylpentylperoxyisobutyrate, le 4-hydroxy-2-méthylpentylperoxy-(2-butyloctanoate), le 4-hydroxy-2-méthylpentylperoxypivalate, le 4-hydroxy-2-méthylpentylperoxynéohexanoate, le 4-hydroxy-2-méthylpentylperoxynéotridécanoate, le 4-hydroxy-2-méthylhexylperoxynéohexanoate, le 4-hydroxy-2-méthylhexylperoxynéodécanoate, le 4-hydroxy-2-méthylhexyl peroxypivalate, le 5-hydroxy-1,3,3-triméthylcyclohexyl peroxyneodecanoate, le 4-hydroxy-2,6-diméthyl-2,6-di(néohexanoylperoxy)heptane et le 4-hydroxy-2,6 -diméthyl-2,6-di(néodecanoylperoxy)heptane.

6. Emulsion selon l'une des revendications 1 à 5, **caractérisée en ce que** l'agent antigel est un mélange d'alcool léger et alcool lourd.

7. Emulsion selon la revendication 6, **caractérisée en ce que** l'agent antigel est un mélange de méthanol et de propane-1,2-diol.

8. Emulsion selon l'une des revendications 1 à 7, **caractérisée en ce que** l'agent colloïde protecteur est un acétate de polyvinyle hydrolysé à un degré de 5 à 85% en mole, de préférence de 5 à 75% en mole.

9. Emulsion selon l'une des revendications 1 à 3, **caractérisée en ce qu'**elle est constituée de :
a. 45 à 65% en poids de 4-hydroxy-2-méthylpentyl peroxynéodécanoate;
b. 2 à 20% en poids d'un mélange de méthanol et de propane-1,2-diol ;
c. 0.01 à 10% en poids d'alcool polyvinylique ou d'acétate de polyvinyle hydrolysé à un degré de 5 à 85% en mole, de préférence de 5 à 75% en mole; et
le reste étant de l'eau pour faire un total de 100% en poids.

10. Procédé de préparation de l'émulsion selon l'une des revendications 1 à 9, **caractérisé en ce que** l'agent anti-gel ainsi que l'agent colloïde protecteur sont dispersés dans de l'eau pour obtenir une phase aqueuse homogène puis le peroxyde est ajouté à ladite phase aqueuse, le tout étant ensuite émulsionné au cours d'une étape d'émulsion à une température < à 5 °C.

11. Procédé selon la revendication 10, **caractérisé en ce que** l'étape d'émulsion est réalisée avec un mélangeur à fort taux de cisaillement pour diviser le peroxyde dans la phase aqueuse, tel qu'un mélangeur ultrasonique ou un mélangeur rotor-stator.

12. Utilisation de l'émulsion selon l'une des revendications 1 à 9 pour la polymérisation ou la copolymérisation de monomères éthyléniquement insaturés.

13. Utilisation selon la revendication 13, **caractérisé en ce que** les monomères éthyléniquement insaturés comprennent le chlorure de vinyle.

## Patentansprüche

1. Flüssige wässrige Emulsion von organischem Peroxid, die frei von Tensid und organischem Lösungsmittel ist, eine Gelierungstemperatur < -10°C aufweist und aus
a. 10 bis 65 Gew.-% Hydroxyperoxyester als organisches Peroxid mit einer 10-Stunden-Halbwertszeit-Temperatur < 50° C und
b. 2 bis 25 Gew.-% Gefrierschutzmittel vom Typ niederer Alkohol aus der Gruppe umfassend Methanol, Ethanol, n-Propanol und Isopropanol und/oder vom Typ schwerer Alkohol aus der Gruppe umfassend Ethylenglykol, Propan-1,2-diol, Propan-1,3-diol, Glycerin, Butan-1-ol, Butan-2-ol, Butan-1,3-diol und Butan-1,4-diol;
c. 0,01 bis 10 Gew.-% eines Schutzkolloids aus der Gruppe der Polyvinylalkohole, teilhydrolysierten Polyvinylacetate und Cellulosederivate;
d. gegebenenfalls einem oder mehreren Additiven und
e. Rest Wasser bis zu einer Summe von 100 Gew.-% besteht.

2. Emulsion nach Anspruch 1 mit einer Fließzeit < 200 s gemäß ASTM D 1200.

3. Emulsion nach Anspruch 1 oder 2, **dadurch gekennzeichnet, dass** die Größe (d50) der die Emulsion bildenden Tröpfchen < 10 µm und vorzugsweise < 5 µm ist und die Größe (d100) der Tröpfchen < 15 µm und vorzugsweise < 11 µm ist.

4. Emulsion nach einem der Ansprüche 1 bis 7, **dadurch gekennzeichnet, dass** die Emulsion aus
a. 50 bis 60 Gew.-% organischem Peroxid;
b. 5 bis 20 Gew.-% Gefrierschutzmittel;
c. 0,5 bis 5 Gew.-% Schutzkolloid und
Rest Wasser bis zu einer Summe von 100 Gew.-% besteht.

5. Emulsion nach einem der Ansprüche 1 bis 4, **dadurch gekennzeichnet, dass** der Hydroxyperoxyester aus der Gruppe umfassend 4-Hydroxy-2-methylpentyl-peroxyneodecanoat, 4-Hydroxy-2-methylpentylperoxy-neoheptanoat, 4-Hydroxy-2-methylpentylperoxy(2-ethylhexanoat), 4-Hydroxy-2-methylpentylperoxy-2-phenylbutyrat, 4-Hydroxy-2-methylpentylperoxy-2-phenoxypropionat, 4-Hydroxy-2-methylpentylperoxy-methacrylat, 4-Hydroxy-2-methylpentylperoxy-2-methylcrotonat, 4-Hydroxy-2-methylpentylperoxy-isobutyrat, 4-Hydroxy-2-methylpentylperoxy(2-butyloctanoat), 4-Hydroxy-2-methylpentylperoxy-pivalat, 4-Hydroxy-2-methylpentylperoxyneohexanoat, 4-Hydroxy-2-methylpentylperoxyneotridecanoat, 4-Hydroxy-2-methylhexylperoxyneohexanoat, 4-Hydroxy-2-methylhexylperoxyneodecanoat, 4-Hydroxy-2-methylhexylperoxypivalat, 5-Hydroxy-1,3,3-trimethylcyclohexylperoxyneodecanoat, 4-Hydroxy-2,6-dimethyl-2,6-di(neohexanoylperoxy)heptan und 4-Hydroxy-2,6-dimethyl-2,6-di(neodecanoylperoxy)heptan ausgewählt ist.

6. Emulsion nach einem der Ansprüche 1 bis 5, **dadurch gekennzeichnet, dass** es sich bei dem Gefrierschutzmittel um eine Mischung von niederem Alkohol und schwerem Alkohol handelt.

7. Emulsion nach Anspruch 6, **dadurch gekennzeichnet, dass** es sich bei dem Gefrierschutzmittel um eine Mischung von Methanol und Propan-1,2-diol handelt.

8. Emulsion nach einem der Ansprüche 1 bis 7, **dadurch gekennzeichnet, dass** es sich bei dem Schutzkolloid um ein bis zu einem Grad von 5 bis 85 Mol-% und vorzugsweise 5 bis 75 Mol-% hydrolysiertes Polyvinylacetat handelt.

9. Emulsion nach einem der Ansprüche 1 bis 3, **dadurch gekennzeichnet, dass** sie aus
a. 45 bis 65 Gew.-% 4-Hydroxy-2-methylpentyl-peroxyneodecanoat;
b. 2 bis 20 Gew.-% einer Mischung von Methanol und Propan-1,2-diol;
c. 0,01 bis 10 Gew.-% Polyvinylalkohol oder bis zu einem Grad von 5 bis 85 Mol-% und vorzugsweise 5 bis 75 Mol-% hydrolysiertes Polyvinylacetat und Rest Wasser bis zu einer Summe von 100 Gew.-% besteht.

10. Verfahren zur Herstellung der Emulsion nach einem der Ansprüche 1 bis 9, **dadurch gekennzeichnet, dass** man das Gefrierschutzmittel sowie das Schutzkolloid in Wasser dispergiert, wobei man eine homogene wässrige Phase erhält, und dann das Peroxid zu der wässrigen Phase gibt, wobei das Ganze dann im Lauf eines Emulsionsschritts bei einer Temperatur < 5°C emulgiert wird.

11. Verfahren nach Anspruch 10, **dadurch gekennzeichnet, dass** man den Emulsionsschritt mit einem Schermischer zum Verteilen des Peroxids in der wässrigen Phase, wie einem Ultraschallmischer oder einem Rotor-Stator-Mischer, durchführt.

12. Verwendung der Emulsion nach einem der Ansprüche 1 bis 9 zur Polymerisation oder Copolymerisation von ethylenisch ungesättigten Monomeren.

13. Verwendung nach Anspruch 13, **dadurch gekennzeichnet, dass** die ethylenisch ungesättigten Monomere Vinylchlorid umfassen.

## Claims

1. Liquid aqueous emulsion of an organic peroxide, devoid of surfactant and of organic solvent, having a gelling temperature < -10°C and consisting of:
a. 10% to 65% by weight of hydroxy-peroxyester as organic peroxide with a 10-hour half-life temperature < 50°C; and
b. 2% to 25% by weight of antifreeze of light alcohol type taken from the group comprising methanol, ethanol, n-propanol and isopropanol, and/or of heavy alcohol type taken from the group comprising ethylene glycol, propane-1,2-diol, propane-1,3-diol, glycerol, butan-l-ol, butan2-ol, butane-1,3-diol and butane-1,4-diol;
c. 0,01% to 10% by weight of a protective colloid agent taken from the group of polyvinyl alcohols, polyvinyl acetates which are partially hydrolysed, and cellulose derivatives;
d. optionally, one or more additives; and
e. the rest being water so as to reach a total of 100% by weight.

2. Emulsion according to Claim 1, having a flow time < 200 s according to ASTM D 1200.

3. Emulsion according to either of Claims 1 and 2, **characterized in that** the size (d50) of the droplets forming the emulsion is < 10 µm, preferably < 5 µm, and the size (d100) of the droplets is < 15 µm, preferably < 11 µm.

4. Emulsion according to one of Claims 1 to 7, **characterized in that** said emulsion consists of:
a. 50% to 60% by weight of the organic peroxide;
b. 5% to 20% by weight of antifreeze;
c. 0.5% to 5% by weight of the protective colloid agent; and
the rest being water so as to reach a total of 100% by weight.

5. Emulsion according to one of Claims 1 to 4, **characterized in that** the hydroxy-peroxyester is taken from the group comprising 4-hydroxy-2-methylpentyl peroxyneodecanoate, 4-hydroxy-2-methylpentyl peroxyneoheptanoate, 4-hydroxy-2-methylpentyl peroxy-(2-ethylhexanoate), 4-hydroxy-2-methylpentyl peroxy-2-phenylbutyrate, 4-hydroxy-2-methylpentyl peroxy-2-phenoxypropionate, 4-hydroxy-2-methylpentyl peroxymethacrylate, 4-hydroxy-2-methylpentyl peroxy-2-methylcrotonate, 4-hydroxy-2-methylpentyl peroxyisobutyrate, 4-hydroxy-2-methylpentyl peroxy-(2-butyloctanoate), 4-hydroxy-2-methylpentyl peroxypivalate, 4-hydroxyl-2-methylpentyl peroxyneohexanoate, 4-hydroxy-2-methylpentyl peroxyneotridecanoate, 4-hydroxy-2-methylhexyl peroxyneohexanoate, 4-hydroxy-2-methylhexyl peroxyneodecanoate, 4-hydroxy-2-methylhexyl peroxypivalate, 5-hydroxy-1,3,3-trimethylcyclohexyl peroxyneodecanoate, 4-hydroxy-2,6-dimethyl-2,6-di(neohexanoylperoxy)heptane and 4-hydroxy-2,6-dimethyl-2,6-di(neodecanoylperoxy)heptane.

6. Emulsion according to one of Claims 1 to 5, **characterized in that** the antifreeze is a mixture of light alcohol and heavy alcohol.

7. Emulsion according to Claim 6, **characterized in that** the antifreeze is a mixture of methanol and propane-1,2-diol.

8. Emulsion according to one of Claims 1 to 7, **characterized in that** the protective colloid agent is a polyvinyl acetate hydrolysed to a degree of 5 to 85 mol%, preferably of 5 to 75 mol%.

9. Emulsion according to one of Claims 1 to 3, **characterized in that** it consists of:
a. 45% to 65% by weight of 4-hydroxy-2-methylpentyl peroxyneodecanoate;
b. 2% to 20% by weight of a mixture of methanol and propane-1,2-diol;
c. 0,01% to 10% by weight of polyvinyl alcohol or of polyvinyl acetate hydrolysed to a degree of 5 to 85 mol%, preferably of 5% to 75 mol%; and
the rest being water so as to reach a total of 100% by weight.

10. Process for preparing the emulsion according to one of Claims 1 to 9, **characterized in that** the antifreeze and also the protective colloid agent are dispersed in water so as to obtain a homogeneous aqueous phase, then the peroxide is added to said aqueous phase, the whole mixture then being emulsified during an emulsification step at a temperature < 5°C.

11. Process according to Claim 10, **characterized in that** the emulsification step is carried out with a mixer at a high shear rate so as to divide up the peroxide in the aqueous phase, such as an ultrasonic mixer or a rotor-stator mixer.

12. Use of the emulsion according to one of Claims 1 to 9, for the polymerisation or the copolymerisation of ethylenically unsaturated monomers.

13. Use according to Claim 13, **characterized in that** the ethylenically unsaturated monomers comprise vinyl chloride.
